# EUROPÄISCHE PATENTSCHRIFT

(11) **EP 2 861 676 B1**
(45) Veröffentlichungstag und Bekanntmachung des Hinweises auf die Patenterteilung: **28.12.2016**
(21) Anmeldenummer: 13728135.8
(22) Anmeldetag: 31.05.2013
(51) Int. Cl.: C09D 4/00, C09D 183/08, C09D 5/08

(54) **KORROSIONSSCHUTZ DURCH BESCHICHTUNG MIT EINER HYBRIDSILOXANBASIERTEN SOL-GEL ZUSAMMENSETZUNG**
CORROSION PROTECTION BY COATING WITH A HYBRID SILOXANE-BASED SOL-GEL COMPOSITION
PROTECTION ANTICORROSION AU MOYEN D'UN REVÊTEMENT CONTENANT UNE COMPOSITION SOL-GEL À BASE DE SILOXANE HYBRIDE

(30) Priorität: 13.06.2012 DE 102012011597
(43) Veröffentlichungstag der Anmeldung: 22.04.2015
(73) Patentinhaber: Robert Bosch GmbH, 70442 Stuttgart (DE)
(72) Erfinder: TEDIM, Joao, P-3800-205 Esgueira Aveiro (PT); YASAKAU, Kiryl, P-3810-166 Aveiro (PT); MARQUES, Marco, P-3810-474 Aveira (PT); MONTEIRO, Luis, P-3810-474 Aveiro (PT); ZHELUDKEVICH, Mikhail, P-3810-465 Aveiro (PT)
(86) Internationale Anmeldenummer: PCT/EP2013/061227
(87) Internationale Veröffentlichungsnummer: WO 2013/186064

(56) Entgegenhaltungen:
- US-A1- 2009 148 711
- DATABASE WPI Week 200846 Thomson Scientific, London, GB; AN 2008-H23710 XP002712590, -& JP 2008 127433 A (DAICEL CHEM IND LTD) 5. Juni 2008 (2008-06-05)

## Beschreibung

Die Erfindung betrifft eine hybridsiloxanbasierte Sol-Gel-Zusammensetzung mit einem sauren pH-Wert zur Beschichtung von Kupfersubstraten nach dem Oberbegriff von Anspruch 1, ein Verfahren zur Herstellung einer hybridsiloxanbasierten Sol-Gel-Zusammensetzung nach Anspruch 5, die Verwendung einer hybridsiloxanbasierten Sol-Gel-Zusammensetzung zur Beschichtung eines Kupfersubstrats mittels Tauchbeschichtung nach Anspruch 10 sowie einen Wärmetauscher mit einer Beschichtung aus hybridsiloxanbasierten Sol-Gel-Zusammensetzung nach Anspruch 16.

In den letzten Jahren war eine wachsende Nachfrage an effizienten Produkten, in Bezug auf den Energieverbrauch zu verzeichnen. Dies liegt einerseits daran, dass die Energiepreise stark gestiegen sind und auch in Zukunft noch weiter steigen werden, andererseits aber auch am zunehmenden Umweltbewusstsein (CO₂-Emissionen).

In letzter Zeit zeigt sich dieser Trend auch speziell bei Wärmetauschern zur Warmwasserbereitung, sowohl im industriellen, wie auch im privaten Bereich. Um Kosten zu sparen und aus ökologischen Gesichtspunkten wird immer häufiger auch die Kondensationswärme aus Abgasen sogenannter Brennwert-Heizgeräte genutzt. Diese weisen dann zur Wassererwärmung oder für Heizzwecke speziell für den kondensierenden Betrieb ausgelegte Brennwert-Wärmetauscher auf.

Aufgrund seiner hervorragenden Wärmeleitfähigkeit werden Materialien aus Kupfer häufig für Wärmetauscher verwendet. Weiterhin zeichnen sich Kupfermaterialien durch einfache Verarbeitungsmöglichkeiten aus. Sie können z. B. mit Standard-Verfahren, wie Ziehen, Prägen, Schneiden oder Löten bearbeitet werden. Auch die ausgesprochene Trinkwasser-Kompatibilität und Recycling-Fähigkeit machen Kupfermaterialien zu idealen Werkstoffen für Wärmetauscher.

Abgase weisen oft eine relativ hohe Säurekonzentration auf. Dies ist in der Regel auf die Anwesenheit von SO₂ und NOₓ zurückzuführen. Kupfer ist nicht sehr säurebeständig und neigt unter diesen aggressiven Umweltbedingungen zu Korrosion. Dies ist insbesondere bei hohen Oberflächentemperaturen von mehr als 50 °C und einem hohen Säuregehalt mit einem pH-Wert von unter 3 ein Problem. Unter diesen aggressiven Umweltbedingungen bildet sich auf der Kupferoberfläche eine grüne Korrosionsschicht von Brochantit (Cu₄SO₄(OH)₆), bedingt durch die Reaktion mit der in den Abgasen vorhandenen Schwefelsäure.

Eine Alternative zu den Kupferwärmetauschern stellt der Einsatz von hochwertigem Edelstahl AISI (316L) oder auch Aluminium als Werkstoff dar. Aluminium ist dabei eine kostengünstige Variante zum teuren Edelstahl. Jedoch erfordern Wärmetauscher aus Aluminium regelmäßige, ausgiebige und zudem kostspielige Wartungen. Edelstahl ist teuer, schwerer und hat eine schlechtere Wärmeübertragungseigenschaft als Kupfer oder Aluminium. Aber auch bei hochwertigem Edelstahl ist Korrosion unter aggressiven Umweltbedingungen in Form von Lochfraß bekannt.

Bei Aluminium-Wärmetauschern kann die Korrosion in der Regel ebenfalls nicht verhindert werden. Die Wärmeaustauscheroberflächen korrodieren allmählich. Dabei ist die Korrosionsgeschwindigkeit relativ gering und die Dicke des Wärmetauschers sollte ausreichen, um die Lebensdauer zu gewährleisten. Der größte Nachteil der Aluminium-Wärmetauscher ist, dass eine regelmäßige Wartung erforderlich ist, um Korrosionsprodukte zu entfernen.

Aluminium-Wärmetauscher sind normalerweise nicht für Anwendungen im Trinkwasserbereich geeignet. Dazu müssten die Aluminiumwärmetauscher mit einer doppelten Wand aus zwei unterschiedlichen Metallen, wie beispielsweise Kupfer und Aluminium gefertigt werden, wobei die Aluminiumseite zur Abgasseite gerichtet ist und die Kupferseite zum Trinkwasser. Diese Bimetall-Lösung ist sehr teuer und nur aufwendig herstellbar. Zudem weisen die beiden unterschiedlichen Metalle unterschiedliche Wärmeausdehnungskoeffizienten auf. Durch diese unterschiedliche thermische Ausdehnung der Metalle können z. B. Lücken in der Kontaktfläche entstehen, die zu Verlusten bei der Wärmeübertragung (erhöhte Übergangswiderstände durch den Luftspalt) führen.

Im Vergleich zu den Wärmetauschern aus Edelstahl oder Aluminium, stellen Kupferwärmetauscher, insbesondere dank der sehr hohen Wärmeübergangskoeffizienten weiterhin wettbewerbsfähige Lösungen dar. Aufgrund der einfachen Herstellungsprozesse, die kompakte Bauformen für Wärmetauscher mit konstanter Leistung und den Vorteilen hinsichtlich Größe und Gewicht, gehören Kupfermaterialien weiterhin zu den am besten geeigneten Materialien für Wärmetauscher.

Zur Verbesserung der Korrosionseigenschaften von Kupfer in Wärmetauschern ist es bekannt, die Kupfermaterialien mit einer Beschichtung zu versehen. Die Beschichtung kann beispielsweise eine Sol-Gel-Zusammensetzung aufweisen.

Hybridsiloxanbasierte Sol-Gel-Zusammensetzungen umfassen einen weiten Bereich anorganischer bzw. organisch/anorgansicher Kompositmaterialien, denen alle der Sol-Gel-Prozess als gemeinsame Syntheseroute zugrunde liegt. Dabei kann eine große Auswahl an unterschiedlichen chemischen Verbindungen eingesetzt werden, so dass die Zusammensetzung an die unterschiedlichsten Anwendungsbereiche angepasst werden kann. Bekannte Sol-Gel-Zusammensetzungen weisen allerdings nur eine durchschnittliche Korrosionsbeständigkeit auf, wobei die Verbindung zum Kupfermaterial häufig problematisch ist.

Aus JP 2008 127433 A ist bekannt, dass eine Beschichtung von Metallen mit Polymeren, die Polysiloxanseitenketten aufweisen, eine farblose, transparente Oberfläche erzeugt, die beständig gegenüber entsprechender Umweltfaktoren ist.

Der Erfindung liegt die Aufgabe zugrunde, die Nachteile des Standes der Technik zu beseitigen, und eine Möglichkeit zu schaffen, eine Korrosions-Barriere zum Schutz vor säurehaltigen Abgasen zur Verfügung zu stellen. Insbesondere soll die Korrosionsanfälligkeit von Kupferwärmetauschern verringert werden.

Erfindungsgemäß wird diese Aufgabe durch eine Sol-Gel-Zusammensetzung mit den Merkmalen des Anspruchs 1, mit einem Verfahren nach Anspruch 5, durch eine Verwendung nach Anspruch 10 und durch einen Wärmetauscher mit den Merkmalen des Anspruchs 16 gelöst. Vorteilhafte Weiterbildungen sind den Unteransprüchen zu entnehmen.

Bei einer hybridsiloxanbasierten Sol-Gel-Zusammensetzung mit einem sauren pH-Wert, sieht die Erfindung eine Mischung vor, umfassend
a) ein thiolfunktionalisiertes Trialkoxyalkylsilan, insbesondere ein Mercaptoalkyltrialkoxysilan
b) ein Trialkoxyarylsilan,
c) ein Trialkoxyalkylsilan,
d) ein Trialkoxyalkenylsilan,
e) einen Radikalstarter, und
f) ein Lösungsmittelgemisch mit saurem pH-Wert.
Eine derartige Sol-Gel-Zusammensetzung kann zur Beschichtung von Metallen, wie z. B. Kupfersubstraten verwendet werden und dient somit als gute Korrosions-Barriere. Das beschichtete Material kann dann z. B. säurehaltigen Abgasen ausgesetzt werden, ohne dass Korrosionsschäden auftreten. Der große Vorteil dieser Zusammensetzung besteht darin, dass sie leicht und auch in großen Mengen gut herstellbar ist. Der Einsatz eines thiolfunktionalisierten Trialkoxyalkylsilans in der Sol-Gel-Zusammensetzung ist von entscheidender Bedeutung zur Passivierung von Metallen, wie Kupfer, gegen Korrosion. Die Thiolfunktion des Trialkoxialkylsilans zeichnet sich durch eine überaus große Affinität zu Edelmetallen und insbesondere zu Kupfer, Silber oder Gold aus. So dient das thiolfunktionalisierte Trialkoxyalkylsilan in spezieller Weise zur kovalenten Bindung der Sol-Gel-Zusammensetzung auf dem Metall. Somit wird auf diese Weise durch den Zusatz einer thiolfunktionalisierten Gruppe die Bindung der Sol-Gel-Zusammensetzung auf dem Kupfersubstrat wesentlich verbessert.

Es wird eine starke Vernetzung innerhalb der Sol-Gel-Zusammensetzung erreicht, indem die Vernetzung der Moleküle untereinander nicht nur durch Kondensation der unterschiedlich funktionalisierten Siloxane (Trialkoxyarylsilan, Trialkoxyalkylsilan) stattfindet, sondern zusätzlich noch durch die Zugabe eines Vernetzers, also einem polymerisationsfähigem Monomerbaustein, wie einem Acrylat oder einem Methacrylat, versetzt wird. Die Sol-Gel-Zusammensetzung bildet also ein Hybridsystem. Das hat den Vorteil, dass die Sol-Gel-Zusammensetzung eine stabile Beschichtung ausbilden kann und die zu beschichtende Oberfläche sehr gut benetzt wird. Weiterhin bildet die Kombination von anorganischen Polymeren mit organischen Polymeren die Möglichkeit, die Eigenschaften der Beschichtung mittels der Sol-Gel Zusammensetzung bezüglich Elastizität, Säurebeständigkeit, Kratzfestigkeit, Härte oder chemische Beständigkeit zu optimieren. Dabei kann der Monomerbaustein auch mit einem Trialkoxysilan funktionalisiert sein und ein Trialkoxyalkenylsilan sein. Mittels Zugabe eines Radikalstarters kann die Sol-Gel-Zusammensetzung auch copolymerisiert werden und so echte interpenetrierende Netzwerke ausbilden. Vorzugsweise werden die organischen Polymere mittels einer radikalischen Polymerisation innerhalb der Sol-Gel-Zusammensetzung erzeugt.

Dabei können unterschiedlich funktionalisierte Siloxane eingesetzt werden, um die erfindungsgemäße Zusammensetzung zu erhalten. Eine besonders vorteilhafte Zusammensetzung wird erhalten, wenn in der hybridsiloxanbasierten Sol-Gel-Zusammensetzung
a) das Thiol-funktionalisierte Trialkoxyalkylsilan ein 3-Mercaptopropyltrialkoxysilan, ein 3-Mercaptopropyltriethoxysilan oder ein 3-Mercaptopropyltrimethoxysilan ist;
b) das Trialkoxyarylsilan ein Phenyltrimethoxysilan oder ein Phenyltriethoxysilan ist;
c) das Trialkoxyalkylsilan ein Propyltrimethoxysilan, ein n-Butyltrimethoxysilan, ein i-Butyltrimethoxysilan oder ein Methyltrimethoxysilan ist;
d) das Trialkoxyalkenylsilan ein 3-Methacryloxypropyltrimethoxysilan, ein 3-Methacryloxypropyltriethoxysilan, ein Methacryloxymethyltriethoxysilan, ein Acryloxypropyltrimethoxysilan, ein Vinyltrimethoxysilan oder ein Vinyltriethoxysilan ist;
e) der Radikalstarter 2,2'-azo-*bis*-isobutyrylnitrile oder Benzoyl Peroxid ist, und
f) das saure Lösungsmittelgemisch eine Mischung aus 0.1 M HNO₃ und einem Alkohol aufweist.

Mit dieser Zusammensetzung aus den oben genannten Verbindungen wird eine ideal zur Passivierung von Kupfer geeignete hybridbasierte Sol-Gel-Zusammensetzung erhalten, insbesondere, ein Verhältnis der Stoffe a: b : c : d ein molares Verhältnis von 2,5 : 2,5 : 5 : 1 ist, wobei die Stoffe a : b : c : d vorzugsweise Thiol-Trialcoxyalkylsilane, Trialkoxyarylsilane, Trialkoxyalkylsilane und Trialkoxyalkenylsilane sind.

Bei dieser Zusammensetzung der unterschiedlichen Siloxane liegt ein optimales Verhältnis zur Copolymerisation des acrylatfunktionalisierten Siloxans mit den anderen funktionalisierten Siloxanen vor. Es wird bei dieser Zusammensetzung der Stoffe in diesem Verhältnis eine sehr gute Zusammensetzung der hybridbasierten Sol-Gel-Zusammensetzung erhalten.

2-Propanol steht mit 5,5 im Molarverhältnis zu Trialkoxyalkenylsilan. Es wird daher weiterhin vorgeschlagen, dass das Molarverhältnis der gegebenen Komponenten folgendermaßen modifiziert werden kann: 1 bis 7 für Trialkoxyalkylsilan und Trialkoxyarylsilane, 2 bis 14 für Trialkoxyalkylsilan, 0,2 bis 5 für Trialkoxyalkenylsilan und 0,5 bis 20 für 2-Propanol oder auch ein anderes Lösungsmittel.

In einer weiteren vorteilhaften Ausführungsform wird der Radikalstarter in einem Verhältnis von 1 mol% bezogen auf das Trialkoxyalkenylsilan eingesetzt. Mit dieser Radikalstarterkonzentration wird eine optimale Vernetzung der kondensierten Siloxane mittels des polymerisationsfähigen Siloxanmonomers erreicht. Auf diese Weise wird das Hybrid-System erhalten. Die Vernetzung der Moleküle untereinander findet nicht nur durch Kondensation der Siloxane statt, sondern zusätzlich noch über eine Copolymerisation. Vorzugsweise wird als Radikalstarter hierbei 2,2-Azo*bis*-(2-methylbutyronitril) (VAZO) eingesetzt, aber auch andere Radikalstarter wie z. B. Dibenzoyperoxid (BPO) oder Azoisobutyronitril (AIBN) können als Starter für die radikalische Polymerisation der Alkenylsilane eingesetzt werden.

Weiterhin betrifft die Erfindung ein Verfahren zur Herstellung einer hybridsiloxanbasierten Sol-Gel-Zusammensetzung nach Anspruch 1, umfassend folgende Schritte:
1) Herstellen einer ersten Lösung 1 aus Trialkoxyalkylsilan, Trialkoxyalkenylsilan und einem Lösungsmittelgemisch mit saurem pH-Wert;
2) Herstellen einer zweiten Lösung 2 aus thiolfunktionalisiertem Trialkoxyalkylsilan, Trialkoxyarylsilan und einem Lösungsmittelgemisch mit saurem pH-Wert;
3) Rühren der ersten Lösung 1 und der zweiten Lösung 2 in separaten Ansätzen;
4) Mischen der ersten Lösung 1 und der zweiten Lösung 2 zu einer dritten Lösung 3;
5) Rühren der dritten Lösung 3 und anschließendes Ruhenlassen;
6) Zugabe eines Radikalstarters zur Lösung 3;
7) Rühren;
8) Ruhen lassen.

Dieses Verfahren ermöglicht eine einfache Herstellung der hybridbasierten Sol-Gel-Zusammensetzung. Die einzelnen Bestandteile können einfach zusammengemischt werden. Dazu sind keine speziellen Geräte oder sonstige aufwendige Reaktionsschritte oder Reinigungsprozesse notwendig.

Zur Herstellung der ersten Lösung 1 wird das Trialkoxyalkylsilan und das Trialkoxyalkenylsilan zum Beispiel in einem Gefäß mit einem Alkohol, bevorzugt 2-Propanol, unter Rühren gelöst. Durch Zugabe einer Säure, vorzugsweise einer Mineralsäure, wobei die Zugabe von verdünnter wässriger Salpetersäure (HNO₃) mit einer Konzentration von 0.1 mol/L bevorzugt ist, wird ein saurer pH-Wert der Lösung 1 von beispielsweise 3 erhalten. Die zweite Lösung 2 wird nach gleichem Vorgehen hergestellt. Die Lösungen 1 und 2 werden getrennt voneinander vorbereitet. Dabei ist es vorteilhaft, wenn Schritt 3) bei einer Temperatur von 10 bis 40 °C, bevorzugt 15 bis 30 °C und besonders bevorzugt bei 22 °C für einen Zeitraum von 15 min. bis 3 Stunden, bevorzugt für ein bis zwei Stunden und besonders bevorzugt für eine Stunde durchgeführt wird. Auf diese Weise wird die Hydrolyse der Siloxane gestartet und durch die einsetzende Kondensationsreaktion beginnt die Gel-Bildung der Zusammensetzung. Dabei ist eine exakte Temperaturkontrolle wichtig. Die Temperaturkontrolle gelingt am besten, wenn die Reaktionsgefäße in temperierten Wasserbädern aufbewahrt werden. Schließlich werden unter Rühren beide Lösungen 1 und 2 vermischt, wobei Lösung 3 erhalten wird.

Dabei ist es weiterhin vorteilhaft, dass das Rühren gemäß Schritt 5) bei einer Temperatur von 10 bis 40 °C, bevorzugt 15 bis 30 °C und besonders bevorzugt bei 22 °C für einen Zeitraum von 15 min. bis 3 Stunden, bevorzugt für ein bis zwei Stunden und besonders bevorzugt für eine Stunde durchgeführt wird und das anschließende Ruhenlassen bei einer Temperatur von 10 bis 40 °C, bevorzugt 15 bis 30 °C und besonders bevorzugt bei 22 °C für einen Zeitraum von 15 min. bis 3 Stunden, bevorzugt für ein bis zwei Stunden und besonders bevorzugt für eine Stunde durchgeführt wird. Auch hierbei ist eine Temperaturkontrolle wichtig. Während dieser Zeit setzt sich die Kondensationsreaktion und damit einhergehend die Gel-Bildung fort. Um eine gute Vermischung der beiden vorvernetzten Lösungen 1 und 2 in der erhaltenen Lösung 3 zu gewährleisten, wird für eine Stunde gerührt. Das weitere Vernetzten der Lösung 3 wird durch mindestens eine weitere Stunde Ruhen lassen erreicht.

Zum Erhalt der hybridbasierten Zusammensetzung ist es vorteilhaft, wenn der zugegebene Radikalstarter der Radikalstarter 2,2'-azo-*bis*-isobutyrylnitrile oder Benzoyl Peroxid ist und die eingesetzte Menge 0.25 bis 10 mol%, bevorzugt 0.75 bis 5 mol%, besonders bevorzugt 1 bis 2 mol% und ganz besonders bevorzugt 1 mol % des eingesetzten Trialkoxyalkenylsilans beträgt, um die vorvernetzte Lösung 3 mittels einer radikalischen Polymerisation interpenetrierend zu vernetzen und ein stabiles Netzwerk zu erhalten. Somit liegt nicht nur eine Sol-Gel Vernetzung (anorganische Vernetzung) vor, sondern dieses Netzwerk wird mittels Polymerisation (organische Vernetzung) weiter stabilisiert. Ein großer Vorteil dabei ist, dass beide Vernetzungsmethoden ineinandergreifen und sich die beiden Netzwerke gegenseitig durchdringen, wodurch eine weitere Stabilitätserhöhung der hybridsiloxanbasierten Zusammensetzung erreicht wird.

Ein weiterer vorteilhafter Reaktionsschritt ist das Ruhenlassen der Sol-Gel-Zusammensetzung gemäß Schritt 8) bei einer Temperatur von 10 bis 40 °C, bevorzugt 15 bis 30 °C und besonders bevorzugt bei 22 °C für einen Zeitraum von 15 Stunden bis 5 Tage, bevorzugt ein Tag bis 4 Tage und ganz besonders bevorzugt für ein bis 3 Tage. Während dieser Zeit setzt sich die organische Vernetzung mittels Polymerisation fort und durchdringt das bis dorthin gebildete anorganische Sol-Gel Netzwerk der Siloxane. Weiterhin betrifft die Erfindung die Verwendung der hybridsiloxanbasierten Sol-Gel Zusammensetzung in einem Verfahren zur Beschichtung eines Kupfersubstrats mittels Tauchbeschichtung, umfassend folgende Schritte:
1) Reinigen des Kupfersubstrats
2) Eintauchen des Kupfersubstrats in die hybridsiloxanbasierte Sol-Gel Zusammensetzung
3) Langsames herausziehen des Kupfersubstrats aus der hybridsiloxanbasierten Sol-Gel Zusammensetzung
4) Trocknen der Beschichtung auf dem Kupfersubstrat
5) Härten der Beschichtung auf dem Kupfersubstrat

Alternativ zur Tauchbeschichtung ist auch ein Spraybeschichtungsverfahren denkbar. Dabei wird insbesondere Schritt 2 durch einen Sprayvorgang ersetzt.

Durch die unterschiedlichen Bestandteile der Zusammensetzung und die Kombination der Eigenschaften von anorganischen und organischen Bestandteilen, lassen sich die Eigenschaften der hybridsiloxanbasierten Zusammensetzung bezüglich der Elastizität, der späteren Schichtdicke oder der Härte der späteren Beschichtung einstellen und variieren und somit an die Anforderungen und an die unterschiedlichen Materialen anpassen. Um die zu beschichtenden Kupfersubstrate mit der Tauchmethode mit der Beschichtung zu versehen, müssen diese zuerst gründlich gereinigt werden. Dabei werden insbesondere fettartige Schmieren oder Oxidschichten entfernt, um eine gute Bindung zwischen den Thiol-Gruppen und dem metallischen Substrat zu erreichen. Es wird also eine Aktivierung der Metalloberfläche vor dem Sol-Gel-Auftrag erreicht. Dazu werden diese mit unpolaren Lösungsmitteln, wie z. B. Diethylether, Toluen, Waschbenzin, Heptan oder Chloroform und anschließend mit polaren Lösungsmitteln, wie diversen Alkoholen (Ethanol, Methanol), Wasser oder Aceton gereinigt. Nach den Reinigungsvorgängen muss jeweils ein Spül- und ein Trocknungsvorgang folgen. Auf diese Weise wird eine optimale Beschichtung der Oberfläche gewährleistet. Durch die Verwendung der hybridsiloxanbasierten Sol-Gel-Zusammensetzung in einem Verfahren zur Beschichtung eines Kupfersubstrats wird eine Passivierung dieses Kupfersubstrats erreicht. Der Aufwand wird dabei gering gehalten. Die Einsatzmöglichkeiten für das Kupfersubstrat werden damit erweitert.

In einem bevorzugten Beschichtungsvorgang, wird das Kupfersubstrat in die hybridsiloxanbasierte Sol-Gel-Zusammensetzung gemäß Schritt 2) 10 sek. bis 10 min., bevorzugt 30 sek. bis 5 min., besonders bevorzugt 45 sek. bis 2 min. und ganz besonders bevorzugt für eine Minute eingetaucht. Während dieser Zeit können die thiolfunktionalisierten Bausteine mit der zuvor gereinigten Kupfersubstratoberfläche reagieren und fest darauf haften. Dadurch, dass das Herausziehen des Kupfersubstrats gemäß Schritt 3) mit einer Geschwindigkeit von 20 bis 120 cm/min, bevorzugt 30 bis 80 cm/min, besonders bevorzugt 40 bis 50 cm/min und ganz besonders bevorzugt 45 cm/min. durchgeführt wird, kann eine Fixierung der Beschichtung und damit des vernetzten Sol-Gel-Netzwerks auf der Kupferoberfläche erfolgen. Dadurch wird eine gleichmäßige Schutzschicht ausgebildet.

Um eine höhere Korrosionsschutz-Barriere und damit eine dickere Beschichtung des Kupfersubstrats zu erhalten, ist es vorteilhaft die Schritte 2) und 3) zu wiederholen, wobei insbesondere ein- bis drei Wiederholungen erfolgen.

Nach dem Aufbringen der Schicht ist es von Vorteil, wenn das Trocknen gemäß Schritt 4) an Luft für 10 bis 45 min., bevorzugt 30 min. bei Raumtemperatur durchgeführt wird. Dabei können die Lösungsmittel verdampfen und die aufgebrachte Beschichtung auf dem Substrat antrocknen. Insbesondere für das anschließende Härten ist es sinnvoll, wenn alle leichtentzündlichen Lösungsmittel vorher verdampft sind.

Bevorzugt wir das anschließende Härten der aufgetragenen Beschichtung gemäß Schritt 5) für 5 bis 20 min, bevorzugt 10 min bei 50 bis 80 °C, bevorzugt 60 °C durchgeführt wird, wonach die Temperatur innerhalb von 15 bis 25 min., bevorzugt 20 min. auf 120 bis 180 °C, bevorzugt 150 °C erhöht wird und bei dieser Temperatur für 30 min. bis 3 Stunden, bevorzugt eine Stunde gehalten wird. Dabei schreitet die Vernetzung bis hin zur vollständigen Polymerisierung und Kondensation weiter fort und es bildet sich ein hochvernetzer Beschichtungsfilm, der die Oberfläche vor äußeren Einflüssen effektiv schützt.

Weiterhin betrifft die Erfindung einen Wärmetauscher, der Kupfer aufweist, wobei dieser Wärmetauscher mit einer erfindungsgemäßen hybridsiloxanbasierten Sol-Gel-Zusammensetzung gemäß den Patentansprüchen 1 bis 9 beschichtet ist. Gerade Wärmetauscher aus Kupfer und insbesondere solche, die zur Wassererwärmung mittels Abwärme von Abgasen eingesetzt werden, sind sehr aggressiven Umweltbedingungen ausgesetzt. Insbesondere die säurehaltigen Abgase greifen das Kupfermaterial an und verursachen häufig starke Korrosionsschäden an den Kupferwärmeaustauschern. Eine Beschichtung mit der erfindungsgemäßen hybridsiloxanbasierten Sol-Gel-Zusammensetzung erzeugt eine Passivierungsschicht auf dem Kupferwärmeaustauscher und schützt diesen somit effektiv gegen Korrosion durch saure Abgase. Der Einsatz der effizienten und kompakten Kupferwärmetauscher ist dann auch unter aggresiven Umweltbedingungen möglich.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig.1:: eine schematische Sol-Gel Syntheseroute und
- Fig.2:: eine elektrochemische Impedanzspektroskopie von unbeschichtetem Kupfer und mit der erfindungsgemäßen Sol-Gel-Zusammensetzung beschichteten Kupferteilen.

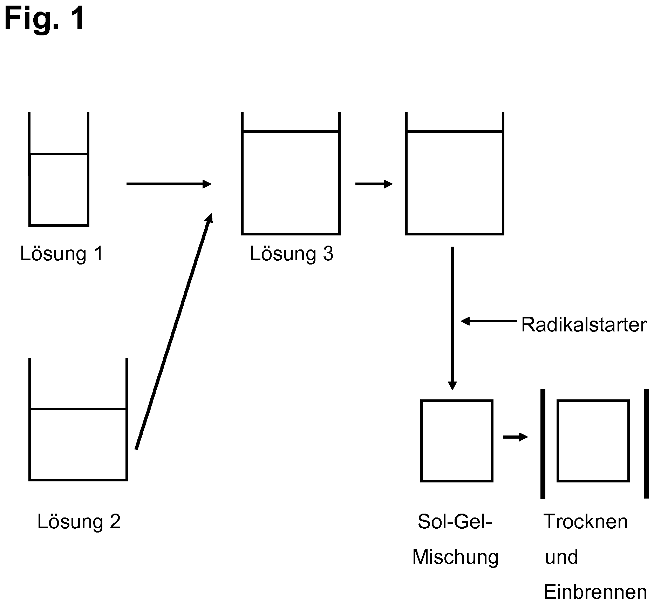

Fig. 1 zeigt einen schematisierten Weg zur Herstellung der erfindungsgemäßen hybridsiloxanbasierten Sol-Gel-Zusammensetzung. Dabei wird Lösung 1 durch Mischung von 3.8 mL (19 mmol) Methyltriethoxysilan (MTEOS) und 0.65 mL (2.7 mmol) 3-Methylacryloxypropyltrimethoxysilan (MAPTS) in 4.45 mL 2-Propanol unter ständigem Rühren erhalten. Anschließende Zugabe von 1.23 mL 0.1 M HNO₃ startet die Hydrolyse. Lösung 1 wird eine Stunde bei 22 °C unter kontrollierter Temperatur im Wasserbad gerührt. Lösung 2 wird durch Mischung von 1.78 mL (9.6 mmol) 3-Mercaptopropyl-trimethoxysilan (MPTMS) und 1.76 mL (9.4 mmol) Phenyltrimethoxysilan (PTMS) in 3.54 mL 2-Propanol unter ständigem Rühren erhalten. Anschließende Zugabe von 1.026 mL 0.1 M HNO₃ startet die Hydrolyse von Lösung 2, die ebenfalls eine Stunde bei 22 °C unter kontrollierter Temperatur im Wasserbad gerührt wird.

Durch Mischung von Lösung 1 und Lösung 2 in einem neuen Gefäß wird Lösung 3 erhalten. Die Lösung 3 wird eine Stunde bei 22 °C gerührt und eine Stunde ruhen gelassen. Danach werden 7.2 mg (0.37 mmol) 2,2-Azobis-(2-methylbutyronitril) (VAZO), 1 mol% bezogen auf MAPTS, als Radikalstarter zugegeben und die Mischung so lange gerührt, bis sich der Feststoff komplett gelöst hat. Anschließend wird die erhaltene Lösung für mindestens einen Tag bei 22 °C stehen gelassen, um so die fertige Sol-Gel-Mischung zu erhalten. Um einen höheren Kondensationsgrad und damit einhergehend eine höhere Vernetzung zu erreichen, kann die Reaktionsmischung auch bis zu 3 Tage bei Raumtemperatur (ca. 22 °C) stehen gelassen werden.

Der Beschichtungsvorgang des Kupfersubstrats wird mittels der Eintauchmethode durchgeführt. Dazu wird das gereinigte Kupfersubstrat, z. B. ein Wärmetauscher, für eine Minute in die Sol-Gel-Zusammensetzung getaucht. Nach dieser Zeit wird das Substrat langsam und mit einer Geschwindigkeit von 45 cm/min aus der Zusammensetzung gezogen. Um eine höhere Beschichtungsdicke auf dem Substrat zu erhalten, wird der Beschichtungsvorgang beispielsweise zweimal wiederholt. Anschließend wird das beschichtete Substrat für 30 min. an der Luft bei Raumtemperatur getrocknet und dann zum Härten in einen Ofen überführt. Zuerst wird das Substrat in dem Ofen für 10 min. bei 60 °C getrocknet, bevor die Temperatur innerhalb von 20 min. auf 150 °C erhöht wird. Abschließend verbleibt das beschichtete Substrat für eine Stunde bei 150 °C im Ofen, um die Beschichtung vollständig aushärten zu lassen. Dieser Schritt ist in Fi. 1 mit "Trocknen und Einbrennen" bezeichnet.

Eine Sol-Gel Zusammensetzung mit höherer Viskosität kann erhalten werden, wenn das Volumen an 2-Propanol in der Synthese der Sol-Gel-Zusammensetzung verringert wird.

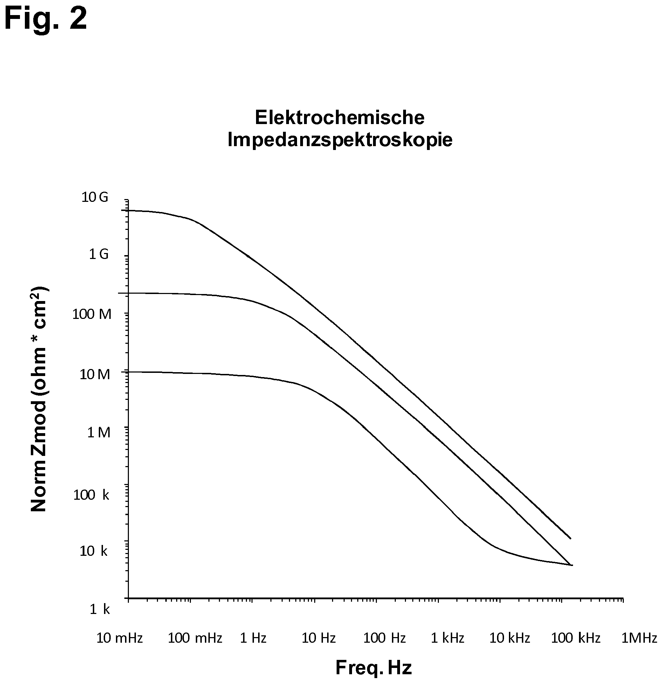

Fig. 2 zeigt in einem Diagramm schematisch das Korrosionsverhalten von beschichtetem und unbeschichtetem Kupfersubstrat. Die beschichteten Kupfersubstrate sind mit der erfindungsgemäßen hybridbasierten Sol-Gel-Zusammensetzung beschichtet. Alle Kupfersubstrate werden den gleichen aggressiven Umweltbedingungen ausgesetzt. Dazu werden die Kupfersubstrate über 7 Tage mit verdünnter wässriger Schwefelsäure mit einem pH-Wert von 3 bei 70 °C behandelt (oberste Kurve). Anschließend werden das beschichtete Kupfersubstrat und das unbeschichtete Kupfersubstrat (unterste Kurve) mittels elektrochemischer Impedanzspektroskopie (EIS) untersucht. Das mit der erfindungsgemäßen Sol-Gel-Zusammensetzung beschichtete Kupfersubstrat weist dabei in der elektrochemischen Impedanzspektroskopie im Vergleich zum unbeschichteten Kupfersubstrat eine signifikant (6-fach) verringerte Korrosion auf. Die hybridsiloxanbasierte Sol-Gel-Zusammensetzung stellt somit eine effektive Korrosions-Barriere dar.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritte können sowohl für sich, als auch in den verschiedensten Kombinationen erfindungswesentlich sein.

## Patentansprüche

1. Hybridsiloxanbasierte Sol-Gel-Zusammensetzung mit einem sauren pH-Wert, umfassend eine Mischung aus
a) einem thiolfunktionalisierten Trialkoxyalkylsilan
b) einem Trialkoxyarylsilan,
c) einem Trialkoxyalkylsilan,
d) einem Trialkoxyalkenylsilan,
e) einem Radikalstarter, und
f) einem Lösungsmittelgemisch mit saurem pH-Wert.

2. Hybridsiloxanbasierte Sol-Gel-Zusammensetzung nach Anspruch 1,
**dadurch gekennzeichnet, dass**
a) das Thiol-funktionalisierte Trialkoxyalkylsilan ein 3-Mercaptopropyltrialkoxysilan, ein 3-Mercaptopropyltriethoxysilan oder ein 3-Mercaptopropyltrimethoxysilan ist,
b) das Trialkoxyarylsilan ein Phenyltrimethoxysilan oder ein Phenyltriethoxysilan ist,
c) das Trialkoxyalkylsilan ein Propyltrimethoxysilan, ein n-Butyltrimethoxysilan, ein i-Butyltrimethoxysilan oder ein Methyltrimethoxysilan ist,
d) das Trialkoxyalkenylsilan ein 3-Methacryloxypropyltrimethoxysilan, ein 3-Methacryloxypropyltriethoxysilan, ein Methacryloxymethyltriethoxysilan, ein Acryloxypropyltrimethoxysilan, ein Vinyltrimethoxysilan oder ein Vinyltriethoxysilan ist,
e) der Radikalstarter 2,2'-azo-*bis*-isobutyrylnitrile oder Benzoyl Peroxid ist, und
f) das saure Lösungsmittelgemisch eine Mischung aus 0.1 M HNO₃ und einem Alkohol aufweist.

3. Hybridsiloxanbasierte Sol-Gel-Zusammensetzung nach Anspruch 1 oder 2,
**dadurch gekennzeichnet, dass** ein Verhältnis der Stoffe a : b : c : d ein molares Verhältnis von 2,5 : 2,5 : 5 : 1 ist, wobei die Stoffe a : b : c : d vorzugsweise Thiol-Trialkoxyalkylsilane Trialkoxyarylsilane, Trialkoxyalkylsilane und Trialkoxyalkenylsilane sind.

4. Hybridsiloxanbasierte Sol-Gel-Zusammensetzung nach einem der vorhergehenden Ansprüche,
**dadurch gekennzeichnet, dass** der Radikalstarter in einem Verhältnis von 1 mol% bezogen auf das Trialkoxyalkenylsilan vorliegt.

5. Verfahren zur Herstellung einer hybridsiloxanbasierten Sol-Gel-Zusammensetzung nach Anspruch 1, umfassend folgende Schritte:
1) Herstellen einer ersten Lösung 1 aus Trialkoxyalkylsilan, Trialkoxyalkenylsilan und einem Lösungsmittelgemisch mit saurem pH-Wert;
2) Herstellen einer zweiten Lösung 2 aus thiolfunktionalisiertem Trialkoxyalkylsilan, Trialkoxyarylsilan und einem Lösungsmittelgemisch mit saurem pH-Wert;
3) Rühren der ersten Lösung 1 und der zweiten Lösung 2 in separaten Ansätzen;
4) Mischen der ersten Lösung 1 und der zweiten Lösung 2 zu einer dritten Lösung 3;
5) Rühren der dritten Lösung und anschließendes Ruhenlassen;
6) Zugabe eines Radikalstarters zur Lösung 3;
7) Rühren;
8) Ruhen lassen.

6. Verfahren nach Anspruch 5,
**dadurch gekennzeichnet, dass** Schritt 3) bei einer Temperatur von 10 bis 40 °C für einen Zeitraum von 15 min. bis 3 Stunden durchgeführt wird.

7. Verfahren nach einem der Ansprüche 5 bis 6,
**dadurch gekennzeichnet, dass** das Rühren gemäß Schritt 5) bei einer Temperatur von 10 bis 40 °C für einen Zeitraum von 15 min. bis 3 Stunden durchgeführt wird und das anschließende Ruhenlassen bei einer Temperatur von 10 bis 40 °C für einen Zeitraum von 15 min. bis 3 Stunden, durchgeführt wird.

8. Verfahren nach einem der Ansprüche 5 bis 7,
**dadurch gekennzeichnet, dass** der zugegebene Radikalstarter ein 2,2'-azo-*bis-*isobutyrylnitrile oder ein Benzoyl Peroxid ist und die eingesetzte Menge 0.25 bis 10 mol% des eingesetzten Trialkoxyalkenylsilans beträgt.

9. Verfahren nach einem der Ansprüche 5 bis 8,
**dadurch gekennzeichnet, dass** das Ruhenlassen der Sol-Gel-Zusammensetzung gemäß Schritt 8) bei einer Temperatur von 10 bis 40 °C für einen Zeitraum von 15 Stunden bis 5 Tage durchgeführt wird.

10. Verfahren zur Beschichtung eines Kupfersubstrats mittels Tauchbeschichtung, umfassend folgende Schritte:
1) Reinigen des Kupfersubstrats
2) Eintauchen des Kupfersubstrats in die hybridsiloxanbasierte Sol-Gel Zusammensetzung nach einem der Ansprüche 1 bis 9
3) Langsames herausziehen des Kupfersubstrats aus der hybridsiloxanbasierten Sol-Gel-Zusammensetzung
4) Trocknen der Beschichtung auf dem Kupfersubstrat
5) Härten der Beschichtung auf dem Kupfersubstrat

11. Verfahren nach Anspruch 10,
**dadurch gekennzeichnet, dass** das Kupfersubstrat in die hybridsiloxanbasierte Sol-Gel Zusammensetzung gemäß Schritt 2) 10 sek. bis 10 min. eingetaucht wird.

12. Verfahren nach einem der Ansprüche 10 oder 11,
**dadurch gekennzeichnet, dass** das Herausziehen des Kupfersubstrats gemäß Schritt 3) mit einer Geschwindigkeit von 20 bis 120 cm/min durchgeführt wird.

13. Verfahren nach einem der Ansprüche 10 bis 12,
**dadurch gekennzeichnet, dass** die Schritte 2) und 3) wiederholt werden, wobei insbesondere ein- bis drei Wiederholungen erfolgen.

14. Verfahren nach einem der Ansprüche 10 bis 13,
**dadurch gekennzeichnet, dass** das Trocknen gemäß Schritt 4) an Luft für 10 bis 45 min. bei Raumtemperatur durchgeführt wird.

15. Verfahren nach einem der Ansprüche 10 bis 14,
**dadurch gekennzeichnet, dass** das Härten der aufgetragenen Beschichtung gemäß Schritt 5) für 5 bis 20 min. bei 50 bis 80 °C durchgeführt wird, wonach die Temperatur innerhalb von 15 bis 25 min auf 120 bis 180 °C erhöht wird und bei dieser Temperatur für 30 min. bis 3 Stunden gehalten wird.

16. Wärmetauscher, der Kupfer aufweist,
**dadurch gekennzeichnet, dass** dieser mit einer Sol-Gel-Zusammensetzung nach einem der Ansprüche 1 bis 9 beschichtet ist.

## Claims

1. Hybrid-siloxane-based sol-gel composition having an acidic pH, comprising a mixture of
a) a thiol-functionalized trialkoxyalkylsilane,
b) a trialkoxyarylsilane,
c) a trialkoxyalkylsilane,
d) a trialkoxyalkenylsilane,
e) a free-radical initiator and
f) a solvent mixture having an acidic pH.

2. Hybrid-siloxane-based sol-gel composition according to Claim 1, **characterized in that**
a) the thiol-functionalized trialkoxyalkylsilane is a 3-mercaptopropyltrialkoxysilane, a 3-mercaptopropyltriethoxysilane, or a 3-mercaptopropyltrimethoxysilane,
b) the trialkoxyarylsilane is a phenyltrimethoxysilane or a phenyltriethoxysilane,
c) the trialkoxyalkylsilane is a propyltrimethoxysilane, an n-butyltrimethoxysilane, an i-butyltrimethoxysilane or a methyltrimethoxysilane,
d) the trialkoxyalkenylsilane is a 3-methacryloxypropyltrimethoxysilane, a 3-methacryloxypropyltriethoxysilane, a methacryloxymethyltriethoxysilane, an acryloxypropyltrimethoxysilane, a vinyltrimethoxysilane or a vinyltriethoxysilane,
e) the free-radical initiator is 2,2'-azo-bis-isobutyrylnitrile or benzoyl peroxide and
f) the acidic solvent mixture comprises a mixture of 0.1 M HNO₃ and an alcohol.

3. Hybrid-siloxane-based sol-gel composition according to Claim 1 or 2, **characterized in that** a ratio of the substances a:b:c:d is a molar ratio of 2.5:2.5:5:1, wherein the substances a:b:c:d are preferably thiol-trialkoxyalkylsilanes, trialkoxyarylsilanes, trialkoxyalkylsilanes and trialkoxyalkenylsilanes.

4. Hybrid-siloxane-based sol-gel composition according to any of the preceding claims, **characterized in that** the free-radical initiator is present in a ratio of 1 mol% based on the trialkoxyalkenylsilane.

5. Process for preparing a hybrid-siloxane-based sol-gel composition according to Claim 1, comprising the steps of:
1) preparing a first solution 1 of trialkoxyalkylsilane, trialkoxyalkenylsilane and a solvent mixture having an acidic pH;
2) preparing a second solution 2 of thiol-functionalized trialkoxyalkylsilane, trialkoxyarylsilane and a solvent mixture having an acidic pH;
3) stirring the first solution 1 and the second solution 2 in separate batches;
4) mixing the first solution 1 and the second solution 2 to afford a third solution 3;
5) stirring the third solution and subsequently leaving to stand;
6) addition of a free-radical starter to solution 3;
7) stirring;
8) leaving to stand.

6. Process according to Claim 5, **characterized in that** step 3) is performed at a temperature of 10°C to 40°C for a period of 15 min to 3 hours.

7. Process according to either of Claims 5 and 6, **characterized in that** the stirring according to step 5) is performed at a temperature of 10°C to 40°C for a period of 15 min to 3 hours and the subsequent leaving to stand is performed at a temperature of 10°C to 40°C for a period of 15 min to 3 hours.

8. Process according to any of Claims 5 to 7, **characterized in that** the added free-radical initiator is 2,2'-azo-bis-isobutyrylnitrile or benzoyl peroxide and the amount employed is 0.25 to 10 mol% of the employed trialkoxyalkenylsilane.

9. Process according to any of Claims 5 to 8, **characterized in that** the leaving to stand of the sol-gel composition according to step 8) is performed at a temperature of 10°C to 40°C for a period of 15 min to 5 days.

10. Process for coating a copper substrate by dipcoating, comprising the steps of:
1) cleaning the copper substrate
2) immersing the copper substrate in the hybrid-siloxane-based sol-gel composition according to any of Claims 1 to 9
3) slowly withdrawing the copper substrate from the hybrid-siloxane-based sol-gel composition
4) drying the coating on the copper substrate
5) curing the coating on the copper substrate

11. Process according to Claim 10, **characterized in that** the copper substrate is immersed in the hybrid-siloxane-based sol-gel composition according to step 2) for 10 sec to 10 min.

12. Process according to either of Claims 10 and 11, **characterized in that** the withdrawing of the copper substrate according to step 3) is performed at a rate of 20 to 120 cm/min.

13. Process according to any of Claims 10 to 12, **characterized in that** steps 2) and 3) are repeated, wherein in particular one to three repetitions are effected.

14. Process according to any of Claims 10 to 13, **characterized in that** the drying according to step 4) is an air drying performed for 10 to 45 min at room temperature.

15. Process according to any of Claims 10 to 14, **characterized in that** the curing of the applied coating according to step 5) is performed for 5 to 20 min at 50°C to 80°C whereafter the temperature is increased to 120°C to 180°C over 15 to 25 min and held at this temperature for 30 min to 3 hours.

16. Heat exchanger comprising copper, **characterized in that** said heat exchanger is coated with a sol-gel composition according to any of Claims 1 to 9.

## Revendications

1. Composition sol-gel à base de siloxane hybride présentant un pH acide, comprenant un mélange constitué par
a) un trialcoxyalkylsilane fonctionnalisé par thiol,
b) un trialcoxyarylsilane,
c) un trialcoxyalkylsilane,
d) un trialcoxyalcénylsilane,
e) un initiateur radicalaire et
f) un mélange de solvants présentant un pH acide.

2. Composition sol-gel à base de siloxane hybride selon la revendication 1, **caractérisée en ce que**
a) le trialcoxyalkylsilane fonctionnalisé par thiol est un 3-mercaptopropyltrialcoxysilane, un 3-mercaptopropyltriéthoxysilane ou un 3-mercaptopropyltriméthoxysilane,
b) le trialcoxyarylsilane est un phényltriméthoxysilane ou un phényltriéthoxysilane,
c) le trialcoxyalkylsilane est un propyltriméthoxysilane, un n-butyltriméthoxysilane, un i-butyltriméthoxysilane ou un méthyltriméthoxysilane,
d) le trialcoxyalcénylsilane est un 3-méthacryloxypropyltriméthoxysilane, un 3-méthacryloxypropyltriéthoxysilane, un méthacryloxyméthyltriéthoxysilane, un acryloxypropyltriméthoxysilane, un vinyltriméthoxysilane ou un vinyltriéthoxysilane,
e) l'initiateur radicalaire est le 2,2'-azobisisobutyrylnitrile ou le peroxyde de benzoyle et
f) le mélange acide de solvants est un mélange de HNO₃ à 0,1 M et d'un alcool.

3. Composition sol-gel à base de siloxane hybride selon la revendication 1 ou 2, **caractérisée en ce qu'**un rapport des substances a:b:c:d est un rapport molaire de 2,5:2,5:5:1, les substances a:b:c:d étant de préférence des thioltrialcoxyalkylsilanes, des trialcoxyarylsilanes, des trialcoxyalkylsilanes et des trialcoxyalcénylsilanes.

4. Composition sol-gel à base de siloxane hybride selon l'une quelconque des revendications précédentes, **caractérisée en ce que** l'initiateur radicalaire se trouve dans un rapport de 1% en mole par rapport au trialcoxyalcénylsilane.

5. Procédé pour la préparation d'une composition sol-gel à base de siloxane hybride selon la revendication 1, comprenant les étapes de procédé suivantes, consistant à :
1) préparer une première solution 1 constituée par un trialcoxyalkylsilane, un trialcoxyalcénylsilane et un mélange de solvants présentant un pH acide ;
2) préparer une deuxième solution 2 constituée par un trialcoxyalkylsilane fonctionnalisé par thiol, un trialcoxyarylsilane et un mélange de solvants présentant un pH acide ;
3) agiter la première solution 1 et la deuxième solution 2 dans des charges séparées ;
4) mélanger la première solution 1 et la deuxième solution 2 pour former une troisième solution 3 ;
5) agiter la troisième solution et la laisser ensuite au repos ;
6) ajouter un initiateur radicalaire à la solution 3 ;
7) agiter ;
8) laisser au repos.

6. Procédé selon la revendication 5, **caractérisé en ce que** l'étape 3) est réalisée à une température de 10 à 40°C pendant une période de 15 minutes à 3 heures.

7. Procédé selon l'une quelconque des revendications 5 à 6, **caractérisé en ce que** l'agitation selon l'étape 5) est réalisée à une température de 10 à 40°C pendant une période de 15 minutes à 3 heures et le repos consécutif est réalisé à une température de 10 à 40°C pendant une période de 15 minutes à 3 heures.

8. Procédé selon l'une quelconque des revendications 5 à 7, **caractérisé en ce que** l'initiateur radicalaire ajouté est le 2,2'-azobisisobutyrylnitrile ou le peroxyde de benzoyle et la quantité utilisée vaut 0,25 à 10% en mole du trialcoxyalcénylsilane utilisé.

9. Procédé selon l'une quelconque des revendications 5 à 8, **caractérisé en ce que** le repos de la composition sol-gel selon l'étape 8) est réalisé à une température de 10 à 40°C pendant une période de 15 heures à 5 jours.

10. Procédé pour le revêtement d'un substrat de cuivre au moyen d'un revêtement par trempage, comprenant les étapes suivantes, consistant à :
1) nettoyer le substrat de cuivre
2) immerger le substrat de cuivre dans la composition sol-gel à base de siloxane hybride selon l'une quelconque des revendications 1 à 9 ;
3) retirer lentement le substrat de cuivre de la composition sol-gel à base de siloxane hybride
4) sécher le revêtement sur le substrat de cuivre
5) durcir le revêtement sur le substrat de cuivre.

11. Procédé selon la revendication 10, **caractérisé en ce que** le substrat de cuivre est immergé dans la composition sol-gel à base de siloxane hybride selon l'étape 2) pendant 10 secondes à 10 minutes.

12. Procédé selon l'une quelconque des revendications 10 ou 11, **caractérisé en ce que** le retrait du substrat de cuivre selon l'étape 3) est réalisé à une vitesse de 20 à 120 cm/min.

13. Procédé selon l'une quelconque des revendications 10 à 12, **caractérisé en ce que** les étapes 2) et 3) sont répétées, une à trois répétitions étant en particulier réalisées.

14. Procédé selon l'une quelconque des revendications 10 à 13, **caractérisé en ce que** le séchage selon l'étape 4) est réalisé à l'air pendant 10 à 45 minutes à température ambiante.

15. Procédé selon l'une quelconque des revendications 10 à 14, **caractérisé en ce que** le durcissement du revêtement appliqué selon l'étape 5) est réalisé pendant 5 à 20 minutes à 50 jusqu'à 80°C, suite à quoi la température est augmentée en 15 à 25 minutes à 120 jusqu'à 180°C et est maintenue à cette température pendant 30 minutes à 3 heures.

16. Échangeur thermique qui présente du cuivre, **caractérisé en ce que** celui-ci est revêtu par une composition sol-gel selon l'une quelconque des revendications 1 à 9.
